# EUROPEAN PATENT SPECIFICATION

(11) **EP 3 735 063 B1**
(45) Date of publication and mention of the grant of the patent: **17.04.2024**
(21) Application number: 17936192.8
(22) Date of filing: 27.12.2017
(51) Int. Cl.: H04W 72/04, H04L 1/16, H04W 28/04

(54) **BASE STATION AND RADIO COMMUNICATION METHOD**
BASISSTATION UND FUNKKOMMUNIKATIONSVERFAHREN
STATION DE BASE RADIO ET PROCÉDÉ DE RADIOCOMMUNICATION

(43) Date of publication of application: 04.11.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2017/047017
(87) International publication number: WO 2019/130498

(56) References cited:
- WO-A1-2014/157993
- MCC SUPPORT: "Draft Report of 3GPP TSG RAN WG1 #91 v0.1.0 (Reno, USA, 27th November - 1st December 2017)", 3GPP DRAFT; DRAFT_MINUTES_REPORT_RAN1#91_V010, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 7 December 2017 (2017-12-07), XP051370865, Retrieved from the Internet: URL:http://www.3gpp.org/ftp/tsg%5Fran/WG1% 5FRL1/TSGR1%5F91/Report/ [retrieved on 2017-12-07]
- NTT DOCOMO ET AL: "HARQ-ACK feedback", 3GPP DRAFT; R1-1716105, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170921 12 September 2017 (2017-09-12), XP051329764, Retrieved from the Internet: URL:http://www.3gpp.org/ftp/tsg_ran/WG1_RL 1/TSGR1_AH/NR_AH_1709/Docs/ [retrieved on 2017-09-12]
- CATT: "Multiplexing of UCI and UL data on PUSCH", 3GPP TSG RAN WG1 Meeting#91 Rl-1720200, vol. RAN WG1, 18 November 2017 (2017-11-18), - 1 December 2017 (2017-12-01), XP051369836,
- NTT DOCOMO INC: "DL/HL scheduling and HARQ management", 3GPP TSG RAN WG1 Meeting#91 R1- 1720822, vol. RAN WG1, 18 November 2017 (2017-11-18), - 1 December 2017 (2017-12-01), XP051370251,
- NTT DOCOMO Inc.: "UCI multiplexing", 3GPP TSG RAN WG1 Meeting#91 Rl-1720819, vol. RAN WG1, 1 December 2017 (2017-12-01) , XP051370248,
- QUALCOMM INCORPORATED: "Multiplexing of PUCCH and PUSCH", 3GPP TSG RAN WG1 Meeting#91 Rl-1721387, vol. RAN WG1, 27 November 2017 (2017-11-27), - 1 December 2017 (2017-12-01), XP051363831,
- SAMSUNG: "Remaining Issues for UCI Multiplexing in PUSCH", 3GPP TSG RAN WG1 Meeting#91 Rl-1720332, vol. RAN WG1, 13 November 2017 (2017-11-13), - 18 November 2017 (2017-11-18), XP051369919,

## Description

### Technical Field

The present invention relates to a terminal, a base station, a radio communication method, and a system.

### Background Art

In the UMTS (Universal Mobile Telecommunications System) network, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In the existing LTE systems (for example, LTE Rel. 8 to Rel. 13), a user terminal (UE (User Equipment)) transmits uplink control information (UCI) by using a UL data channel (for example, a PUSCH (Physical Uplink Shared Channel)) and/or a UL control channel (for example, a PUCCH (Physical Uplink Control Channel)).

When the transmission timing of uplink data and the transmission timing of uplink control information (UCI) overlap, the UE may transmit the uplink data and the UCI by using an uplink shared channel (PUSCH). To transmit the UCI by using the PUSCH (or, to multiplex the UCI on the PUSCH) is also referred to as UCI on PUSCH (piggyback on PUSCH), UCI piggyback, PUSCH piggyback, and so on.

For example, the UCI may include retransmission control information (also referred to as an HARQ-ACK, an ACK/NACK, an A/N, and so on) for DL data, a scheduling request (SR), and CSI (for example, periodic CSI (P-CSI), aperiodic CSI (A-CSI), and so on).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTR_AN); Overall description; Stage 2 (Release 8)," April, 2010

See also MCC SUPPORT: "Draft Report of 3GPP TSG RAN WG1 #91 v0.1.0 (Reno, USA, 27th November - 1st December 2017)", (3GPP DRAFT; DRAFT_MINUTES_REPORT_RAN1#91_V010, 3GPP, vol. R_AN WG1, no. Athens, Greece) describing an agreement that "For dynamic HARQ-ACK codebook, for UCI piggyback on PUSCH, use DAI_counter in DL assignment and UL DAI in UL grant. HARQ-ACK codebook size is determined by UL DAI and DAI_counter".

### Summary of Invention

### Technical Problem

For future radio communication systems (hereinafter also simply referred to as NR), support of transmission of uplink data and UCI using the PUSCH is under study, as is the case with the existing LTE systems. Further, in NR, in order to implement low latency communication, application of UL grant-free transmission, in which UL data is transmitted without a UL grant, is under study, as well as UL grant-based transmission, in which UL data is transmitted based on a UL grant.

In NR, however, control of multiplexing of UCI on the PUSCH in the UL grant-based transmission and the UL grant-free transmission has not yet been fully studied. Communication throughput, communication quality, and so on may be deteriorated unless an appropriate transmission process is determined.

In view of this, one object of the present disclosure is to provide a base station and a radio communication method capable of preventing deterioration in communication throughput and so on also in a case that multiplexing of uplink control information on an uplink data channel is supported.

### Solution to Problem

According to an aspect of the present invention, there is provided a terminal as set out in Claim 1.

According to another aspect of the present invention, there is provided a radio communication method as set out in Claim 3.

According to another aspect of the present invention, there is provided a base station as set out in Claim 4.

According to another aspect of the present invention, there is provided a system as set out in Claim 5.

### Advantageous Effects of Invention

According to one aspect of the present disclosure, deterioration in communication throughput and so on can be prevented also in a case that multiplexing of uplink control information on an uplink data channel is supported.

### Brief Description of Drawings

FIG. 1 is a diagram to show an example of control of UCI on PUSCH in existing LTE;
FIG. 2 is a diagram to show an example of control of UCI on PUSCH according to a first aspect;
FIG. 3 is a diagram to show an example of control of UCI on PUSCH according to a second aspect;
FIG. 4 is a diagram to show an example of a schematic structure of a radio communication system according to the present embodiment;
FIG. 5 is a diagram to show an example of an overall structure of a radio base station according to the present embodiment;
FIG. 6 is a diagram to show an example of a functional structure of the radio base station according to the present embodiment;
FIG. 7 is a diagram to show an example of an overall structure of a user terminal according to the present embodiment;
FIG. 8 is a diagram to show an example of a functional structure of the user terminal according to the present embodiment; and
FIG. 9 is a diagram to show an example of a hardware structure of the radio base station and the user terminal according to the present embodiment.

### Description of Embodiments

A base station described herein includes a transmitting section that transmits downlink control information indicating UL transmission, and DL data; and a control section that controls scheduling such that the number of bits of a acknowledgement signal for the DL data, the acknowledgement signal being to be multiplexed on a first uplink shared channel that is transmitted based on the downlink control information and/or a second uplink shared channel that is transmitted independently of the downlink control information, is up to a given value.

One existing method for achieving low PAPR (Peak-to-Average Power Ratio) and/or low inter-modulation distortion (IMD) in UL transmission is a method (piggyback) of transmitting UCI and UL data by multiplexing the UCI and the UL data on the PUSCH, which is used when UCI transmission and UL data (UL-SCH) transmission occur at the same timing.

In the existing LTE systems, when UL data and UCI (for example, an A/N) are transmitted by using the PUSCH, puncturing process is performed on the UL data, and the UCI is multiplexed on resources to which the puncturing process is applied. In the existing LTE systems, such an operation is performed because the volume (or ratio) of UCI to be multiplexed on the PUSCH is not significantly large, and/or for the purpose of preventing complexity of a receiving process performed in the base station even if the UE fails to detect a DL signal.

To perform the puncturing process on data refers to a process in which coding is performed on the assumption that resources allocated for the data are available (or without taking an unavailable amount of resources into consideration), but coded symbols are not mapped to actually unavailable resources (for example, resources for UCI) (the resources are reserved). When a receiver arranges not to use the coded symbols of the punctured resources for decoding, deterioration in characteristics due to puncturing can be prevented.

For NR, when UL data and UCI are transmitted by using the PUSCH, application of rate-matching processing to the UL data is also under study.

To apply the rate-matching processing to data refers to a process in which the number of bits after coding (coded bits) is controlled by taking actually available radio resources into consideration. When the number of coded bits is smaller than the number of bits that can be mapped to actually available radio resources, at least a part of the coded bits may be repeated. When the number of coded bits is larger than the number of bits that can be mapped, a part of the coded bits may be eliminated.

When the rate-matching processing is performed on UL data, actually available resources are taken into consideration. Thus, coding can be performed so as to increase the coding rate (with high performance), in comparison with the puncturing process. For this reason, for example, when the rate-matching processing is applied instead of the puncturing process when the payload size of UCI is large, a UL signal can be generated with higher quality. As a result, communication quality can be enhanced.

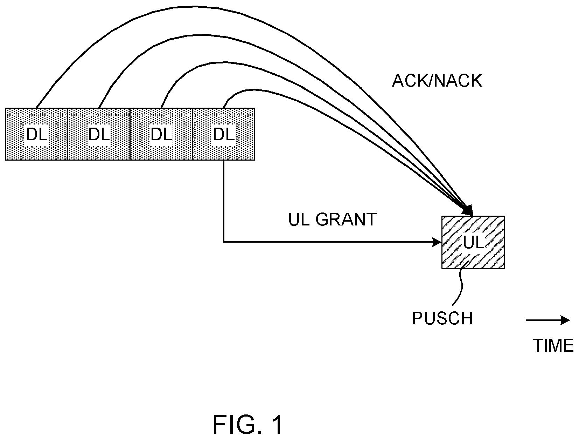

FIG. 1 is a diagram to show an example of control of UCI on PUSCH in existing LTE. In the present example, the part denoted by "DL" or "UL" represents a given resource (for example, a time/frequency resource), and a time period of each of such parts corresponds to a given time unit (for example, one or a plurality of slots, mini-slots, symbols, subframes, or the like). The same also applies to the examples described below.

In the case of FIG. 1, the UE transmits the A/N corresponding to four DL resources shown in the figure by using UL resources indicated by a given UL grant. In the existing LTE systems, the UL grant is reported at the last timing in an HARQ-ACK bundling window, or at timing later than the last timing.

Here, the HARQ-ACK bundling window may be referred to as an HARQ-ACK feedback window, or simply as a bundling window or the like. The HARQ-ACK bundling window herein refers to a time period in which A/N feedback is performed at the same timing.

For example, the UE determines that a given time period from a DL resource indicated by a given DL assignment is a bundling window, and controls feedback by generating A/N bits corresponding to the window. In this manner, the HARQ-ACKs for a plurality of pieces of DL data (PDSCHs) included in the bundling window can be transmitted by multiplexing the HARQ-ACKs on the PUSCH transmitted based on the UL grant.

Incidentally, for NR, in order to implement low latency communication, application of UL grant-free transmission, in which UL data is transmitted without a UL grant, has been studied, as well as UL grant-based transmission, in which UL data is transmitted based on a UL grant.

The UL grant-based transmission may be referred to as UL transmission with a UL grant (UL Transmission with UL grant) or a PUSCH with a UL grant (PUSCH with UL grant). The UL grant-free transmission may be referred to as UL transmission without a UL grant (UL Transmission without UL grant), or may be defined as a type of UL semi-persistent scheduling (SPS).

In the UL grant-based transmission, a radio base station (which may be referred to as, for example, a BS (Base Station), a transmission/reception point (TRP), an eNB (eNodeB), a gNB (NR NodeB), and so on) transmits a downlink control channel (UL grant) for indicating allocation of UL data (PUSCH (Physical Uplink Shared Channel)) to the UE, and the UE transmits the UL data in accordance with the UL grant.

In contrast, in the UL grant-free transmission, the UE transmits UL data without receiving a UL grant for scheduling data. Note that the UL grant-free transmission means transmission without a direct UL grant carried on the PDCCH that is used to perform UL data transmission, and can also adopt application of RRC signaling for configuring the UL grant-free transmission and physical layer signaling (for example, downlink control information (DCI)) for activating the UL grant-free transmission, for example. Accordingly, the UL grant-free transmission may be referred to as PUSCH with Configured Grant, Configured PUSCH, and so on. The UL grant free is hereinafter also simply referred to as ULGF, a PUSCH without a UL grant (PUSCH without UL grant), a GF PUSCH, GF, and so on.

In a similar manner to SPS in existing LTE, the UE can determine whether or not to perform transmission using resources for GF transmission (which may be referred to as GF resources and so on), based on a given activation/deactivation signal. Even when GF transmission is activated, the UE may skip the GF transmission on the condition that a transmission buffer includes no data.

The UE may transmit a confirmation response (ACK (Acknowledgement)) in response to receiving a given activation/deactivation signal. The ACK may be transmitted using MAC CEs, for example.

Several types (type 1, type 2, and so on) is under study with regard to the GF transmission. For example, in type 1, parameters used for GF transmission (which may be referred to as GF transmission parameters, GF parameters, and so on) are configured for the UE by using only higher layer signaling. The GF parameters may include information for identifying GF resources, for example.

Here, for example, the higher layer signaling may be any one or combinations of RRC (Radio Resource Control) signaling, MAC (Medium Access Control) signaling, broadcast information, and the like.

For example, the MAC signaling may use MAC control elements (MAC CE), MAC PDUs (Protocol Data Units), and the like. For example, the broadcast information may be master information blocks (MIBs), system information blocks (SIBs), minimum system information (RMSI (Remaining Minimum System Information)), and the like.

In type 2, some of the GF parameters (for example, a waveform, a period, and so on) are configured for the UE by using higher layer signaling. In the case of type 2, the other parameters may be specified by using an activation signal, for example. The activation signal may be a PDCCH (or DCI) having its cyclic redundancy check (CRC) bits being masked (scrambled) with a radio network temporary identifier (RNTI (Cell-Radio Network Temporary Identifier)) for an activation signal that is configured by using RRC signaling, for example.

In NR as well, UCI on PUSCH is assumed to be supported, as is the case with the existing LTE systems. However, how to control multiplexing of UCI on the PUSCH in the UL grant-based transmission and the UL grant-free transmission has not yet been fully studied.

For example, when the HARQ-ACK for DL data is multiplexed on the PUSCH, how to control the number of bits, the order of the bits, and/or the like of the HARQ-ACK to be multiplexed on the PUSCH presents a problem. When a method of multiplexing the HARQ-ACK on the PUSCH fails to be appropriately controlled, communication throughput, communication quality, and/or the like may be deteriorated.

The inventors of the present invention focused on the difference between the UL grant-based transmission and the UL grant-free transmission (for example, whether or not a UL grant is used or the like), and came up with the idea of controlling each of multiplexing of the HARQ-ACK to be multiplexed on the PUSCH in the UL grant-based transmission and multiplexing of the HARQ-ACK to be multiplexed on the PUSCH in the UL grant-free transmission, based on given information.

For example, according to an aspect of the present disclosure, scheduling is controlled such that the number of bits of the transmission confirmation signal of the DL data to be multiplexed on the first uplink shared channel transmitted based on the downlink control information and/or the second uplink shared channel transmitted regardless of the downlink control information has a given value or less. This can appropriately control multiplexing (for example, with or without multiplexing and the like) of an HARQ-ACK using the PUSCH, and suppress degradation of communication throughput and/or communication quality and the like.

Embodiments of the present disclosure will be described in detail as follows. The aspects described below may be applied individually, or may be applied in combination.

Note that the UCI may include at least one of a scheduling request (SR), acknowledgement information (also referred to as an HARQ-ACK (Hybrid Automatic Repeat reQuest-Acknowledge), an ACK or a NACK (Negative ACK), an A/N, and so on) for a DL data channel (for example, a PDSCH (Physical Downlink Shared Channel), channel state information (CSI), beam index information (BI (Beam Index)), and a buffer status report (BSR).

In the embodiments described below, the HARQ-ACK may be interpreted as UCI, or may be interpreted as other types of UCI, such as an SR and CSI. Further, "2 bits" may be interpreted as a "given number of bits". Note that, in this specification, "data", a "data channel (for example, a PUSCH)", "resources of a data channel", and so on may be interchangeably interpreted.

### (First Aspect)

The first aspect will describe HARQ-ACK multiplexing control performed when the HARQ-ACK (which is also referred to as an HARQ-ACK codebook) is transmitted by using the PUSCH in the UL grant-based transmission.

In the UL grant-based transmission, the base station indicates transmission of the PUSCH for the UE by using given downlink control information (which is also referred to as, for example, a UL grant, DCI format 0, DCI format 0_0, DCI format 0_1, DCI format 0A, or the like).

The UE transmits the HARQ-ACK for DL data (or the PDSCH) transmitted from the base station at given timing. The transmission timing of the HARQ-ACK corresponding to each piece of DL data may be reported from the base station to the UE by using downlink control information. The HARQ-ACK transmission may be controlled based on a bundling window as shown in FIG. 1. The bundling window corresponds to a group of DL subframes (alternatively, DL slots, DL mini-slots, DL-TTIs, PDSCHs, DL transmission intervals, and so on) used to perform HARQ-ACK feedback in a given UL subframe (alternatively, a UL slot, a UL mini-slot, a UL-TTI, a PUCCH/PUSCH, a UL transmission interval, and so on).

When the UE receives a report or an indication of transmission of the HARQ-ACK at timing of transmitting the PUSCH, the UE performs transmission of the HARQ-ACK by multiplexing the HARQ-ACK on the PUSCH. For example, the UE transmits the HARQ-ACK included in the bundling window by multiplexing the HARQ-ACK on the PUSCH.

The number of bits of the HARQ-ACK to be multiplexed on the PUSCH may be semi-statically configured, or may be dynamically configured. The number of bits of the HARQ-ACK to be multiplexed on the PUSCH is also referred to as a codebook size or a total number of bits.

When the codebook size of the HARQ-ACK is semi-statically configured, the codebook size of the HARQ-ACK may be reported to the UE by using higher layer signaling and so on. In this case, the UE controls HARQ-ACK feedback based on the codebook size that is calculated in advance according to higher layer parameters, regardless of the number of scheduled PDSCHs or the number of pieces of DCI for scheduling the PDSCH. For example, the HARQ-ACK codebook can be semi-statically configured regardless the number of scheduled PDSCHs or the number of pieces of DCI for scheduling the PDSCH, by generating HARQ-ACK bits for all the PDSCHs on the assumption that all the PDSCHs included in the bundling window have been scheduled.

When control is performed by dynamically changing the codebook size of the HARQ-ACK to be multiplexed on the PUSCH based on the number of scheduled PDSCHs, the number of bits of the HARQ-ACK can be reduced, and use efficiency of PUSCH resources can be enhanced. In this case, it is considered that the UE determines the number of bits of the HARQ-ACK to be multiplexed on the PUSCH, based on the received PDSCH. However, if the UE fails to detect a part or all of DCI (or the PDCCH) for scheduling the PDSCH, the number of actually scheduled PDSCHs and the number of PDSCHs received in the UE may be different, which presents a problem.

In view of this, in the first aspect, a total number of HARQ-ACK bits to be transmitted by using the PUSCH is determined based on information included in the UL grant for indicating UL transmission. In other words, the total number of bits of the HARQ-ACK to be multiplexed on the PUSCH is reported from the base station to the UE by using the UL grant.

Owing to such a configuration, also when control is performed by dynamically changing the number of bits of the HARQ-ACK to be multiplexed on the PUSCH based on the number of scheduled PDSCHs, multiplexing of the HARQ-ACK can be appropriately performed even if the UE fails to detect DCI (or the PDCCH) for scheduling the PDSCH.

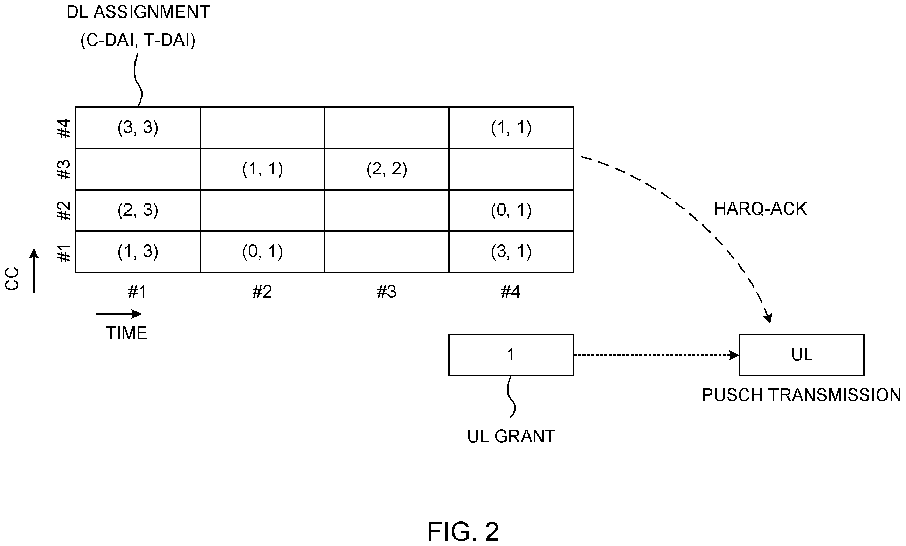

FIG. 2 shows an example of a case in which the codebook size of the HARQ-ACK to be multiplexed on the PUSCH is determined based on information included in the UL grant. Note that FIG. 2 shows a case in which four CCs (or cells) are configured for the UE, and a bundling window corresponding to the PUSCH transmission includes four time units (for example, four slots). The bundling window may be configured based on HARQ-ACK timing indicated in downlink control information. As a matter of course, the number of CCs and the time period of the bundling window that can be applied in the present embodiment are not limited to those described above.

In FIG. 2, in the first slot, the PDSCH is scheduled in CC #1, CC #2, and CC #4. In a similar manner, in the second slot, CC #1 and CC #3 are scheduled. In the third slot, CC #3 is scheduled. In the fourth slot, the PDSCH is scheduled in CC #1, CC #2, and CC #4. In other words, the case shown in FIG. 2 is a case in which nine pieces of DL data are actually scheduled in the range of the bundling window (which herein consists of 16 in total, as calculated by 4 CCs × 4 slots).

In this case, the base station transmits information related to the total number (here, nine) of pieces of DL data scheduled in the bundling window to the UE by embedding the information into downlink control information (UL grant) for indicating transmission of the PUSCH. FIG. 2 shows a case in which the base station reports information related to the total number of pieces of DL data scheduled in the UL grant for indicating PUSCH transmission to the UE by embedding the information into the last slot of the bundling window.

Note that the information related to the total number of pieces of scheduled DL data represents the total number of bits of the HARQ-ACK to be fed back by the UE. The information representing the total number of pieces of scheduled DL data included in the UL grant may be referred to as a DAI (Downlink Assignment Indicator (Index)) or a UL DAI.

The UE determines the number of bits (codebook size) of the HARQ-ACK to be multiplexed on the PUSCH, based on the information representing the total number of pieces of scheduled DL data included in the UL grant. Although FIG. 2 shows a case in which the UL grant including the UL DAI is transmitted in the last slot of the bundling window, the transmission timing of the UL grant is not limited to the above timing, and other slots may be used instead.

The downlink control information (also referred to as a DL assignment) for indicating scheduling of the PDSCH for each CC of each slot may include a counter DAI (C-DAI) and/or a total DAI (T-DAI) .

The counter DAI represents an accumulated value of pieces of scheduled data. For example, counter DAIs numbered according to the order of the CC index may be included in respective pieces of downlink control information for one or a plurality of CCs scheduled in a given time unit (a slot or a subframe). When the HARQ-ACKs for pieces of DL data scheduled over a plurality of time units are collectively fed back (for example, when the bundling window includes a plurality of slots), the counter DAIs are applied to the plurality of time units.

In FIG. 2, in the bundling window, counter DAIs are included in respective pieces of downlink control information for indicating scheduling of DL data. For example, counter DAIs for nine pieces of scheduled DL data are accumulated in ascending order, from a piece of scheduled DL data having the smallest CC index sequentially from a time period having the smallest slot index. FIG. 2 shows a case in which each counter DAI has 2 bits. Thus, the pieces of data that are scheduled in CC #1 of the first slot to CC #4 of the fourth slot are sequentially numbered in the order of "1", "2", "3", and "0" repeatedly.

The total DAI represents a total value (total number) of pieces of scheduled data. For example, the number of pieces of scheduled data may be included in respective pieces of downlink control information for one or a plurality of CCs scheduled in a given time unit (a slot or a subframe). In other words, total DAI value(s) that are included in piece(s) of downlink control information transmitted in the same slot are all the same. When the HARQ-ACKs for pieces of DL data scheduled over a plurality of time units are collectively fed back (for example, when the bundling window includes a plurality of slots), respective total DAIs are configured for the plurality of time units.

In FIG. 2, three pieces of DL data are scheduled in the first slot. Accordingly, the total DAI of the DL assignment transmitted in the first slot is 3 ("3"). In the second slot, two pieces of DL data are scheduled (five pieces, as a total accumulated from the first slot). Accordingly, the total DAI of the DL assignment transmitted in the second slot is 5 ("1"). In the third slot, one piece of DL data is scheduled (six pieces, as a total accumulated from the first slot). Accordingly, the total DAI of the DL assignment transmitted in the third slot is 6 ("2"). In the fourth slot, three pieces of DL data are scheduled (nine pieces, as a total accumulated from the first slot). Accordingly, the total DAI of the DL assignment transmitted in the fourth slot is 9 ("1") .

In FIG. 2, in the bundling window, total DAIs are included in respective pieces of downlink control information for indicating scheduling of DL data. In downlink control information of each slot, a total value of the number of pieces of DL data scheduled on and before the slot is included in the downlink control information as a total DAI. FIG. 2 shows a case in which each total DAI has 2 bits, as with the case of the counter DAI. Thus, a value of the counter DAI that is included in a piece of downlink control information in a CC having the largest CC index among the CCs for scheduling DL data in a given slot and values of the total DAI in the given slot are the same.

Note that the counter DAI and the total DAI can also be configured based on the number of codewords (CWs), instead of the number of CCs. Although FIG. 2 shows a case in which the counter DAI and the total DAI are configured based on the number of CCs (when each CC is one CW), the counter DAI and the total DAI may be configured based on the number of CWs.

Owing to the configuration in which the counter DAI is included in the downlink control information (for example, the DL assignment) for indicating scheduling of DL data, the UE can notice that the UE has failed in detection when the counter DAI is non-consecutive.

When a dynamic change of the codebook size of the HARQ-ACK is configured for the UE from the base station by using higher layer signaling or the like, the UE may control the order of HARQ-ACK bits (A/N allocation order) to be fed back, based on the counter DAI included in the downlink control information.

When the counter DAI included in received downlink control information is non-consecutive, the UE feeds back what presents the non-consecutiveness (DL data) as a NACK to the base station. Owing to such a configuration, even if the UE fails to detect the whole downlink control information for scheduling data of a given CC and thus fails to recognize the CC that the UE has failed to detect, the UE can appropriately perform retransmission control by feeding back the detection failure as a NACK.

As described above, in the first aspect, the UE determines the codebook size of the HARQ-ACK to be multiplexed on the PUSCH, based on information included in the downlink control information (UL grant) for indicating transmission of the PUSCH. In addition, the UE determines allocation of the HARQ-ACK (for example, order of HARQ-ACK bits) to be multiplexed on the PUSCH, based on information included in the downlink control information (DL assignment) for scheduling DL data.

Owing to such a configuration, the UE can appropriately determine the total number of HARQ-ACKs, based on the information included in the UL grant, even if the UE fails to detect the whole downlink control information in the last slot used to perform scheduling of DL data in the bundling window.

Note that the UE may control the codebook size of the HARQ-ACK by semi-statically changing the codebook size. For example, when a semi-static change of the codebook size of the HARQ-ACK is configured for the UE from the base station by using higher layer signaling or the like, the UE applies the codebook size configured in advance, regardless of the number of pieces of scheduled data. The codebook size may be configured for the UE in advance by using higher layer signaling or the like.

For example, the UE feeds back the HARQ-ACK for all of possibly scheduled PDSCHs of all the CCs of each slot in a bundling window. When the codebook size of the HARQ-ACK is controlled by semi-statically changing the codebook size, the UE may control the order of HARQ-ACK bits (A/N allocation order) to be fed back, based on a given condition.

As described above, HARQ-ACK feedback may be controlled by using different methods for the case that the codebook size of the HARQ-ACK is dynamically changed and the case that the codebook size is semi-statically changed.

### (Second Aspect)

The second aspect will describe HARQ-ACK multiplexing control performed when the HARQ-ACK (which is also referred to as an HARQ-ACK codebook) is transmitted by using the PUSCH in the UL grant-free transmission. Note that the following description is based on the assumption that the UL grant-free transmission employs type 1, in which parameters are transmitted to the UE by using only higher layer signaling. However, the UL grant-free transmission may employ type 2.

The UE transmits the HARQ-ACK for DL data (or the PDSCH) transmitted from the base station at given timing. The transmission timing of the HARQ-ACK corresponding to each piece of DL data may be reported from the base station to the UE by using downlink control information. The HARQ-ACK transmission may be controlled based on a bundling window as shown in FIG. 1.

When the UE transmits the HARQ-ACK at timing of transmitting the PUSCH based on the UL grant-free transmission, the UE performs transmission of the HARQ-ACK by multiplexing the HARQ-ACK on the PUSCH. For example, the UE transmits the HARQ-ACK included in the bundling window by multiplexing the HARQ-ACK on the PUSCH at the same timing.

The number of bits of the HARQ-ACK to be multiplexed on the PUSCH may be semi-statically configured, or may be dynamically configured. The number of bits of the HARQ-ACK to be multiplexed on the PUSCH is also referred to as a codebook size or a total number of bits.

When the codebook size of the HARQ-ACK is semi-statically configured, the codebook size of the HARQ-ACK may be reported to the UE by using higher layer signaling and so on. In this case, the UE controls HARQ-ACK feedback, based on the codebook size that is configured in advance, regardless of the number of scheduled PDSCHs.

In contrast, when control is performed by dynamically changing the codebook size of the HARQ-ACK to be multiplexed on the PUSCH, in the second aspect, the codebook size is determined based on information included in the downlink control information (for example, the DL assignment) for scheduling the PDSCH. In other words, in the UL grant-free transmission, the downlink control information (for example, the UL grant) for scheduling the PUSCH is not transmitted, and thus information included in the DL assignment is used instead.

The UE uses, for example, the total DAI as the information included in the DL assignment. In other words, to recognize the total number of bits of the HARQ-ACK to be multiplexed on the PUSCH, determination is made based on information included in the DL assignment, instead of using information included in the UL grant.

Owing to such a configuration, also when PUSCH transmission is performed without a UL grant, the UE can appropriately determine the bit size (codebook size) of the HARQ-ACK to be multiplexed on the PUSCH.

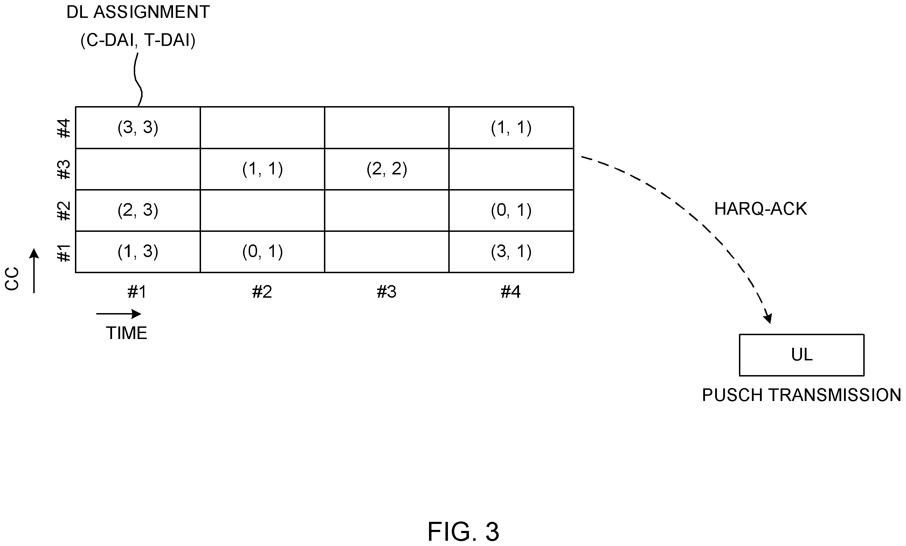

FIG. 3 shows an example of a case in which the codebook size of the HARQ-ACK to be multiplexed on the PUSCH is determined based on information (for example, the total DAI) included in the downlink control information for scheduling the PDSCH. Note that FIG. 3 shows a case in which four CCs (or cells) are configured for the UE, and a bundling window corresponding to the PUSCH transmission includes four time units (for example, four slots). The bundling window may be configured based on HARQ-ACK timing indicated in downlink control information. As a matter of course, the number of CCs and the time period of the bundling window that can be applied in the present embodiment are not limited to those described above.

In FIG. 3, in the first slot, the PDSCH is scheduled in CC #1, CC #2, and CC #4. In a similar manner, in the second slot, CC #1 and CC #3 are scheduled. In the third slot, CC #3 is scheduled. In the fourth slot, the PDSCH is scheduled in CC #1, CC #2, and CC #4. In other words, the case shown in FIG. 3 is a case (the same as FIG. 2 described above) where nine pieces of DL data are actually scheduled in the range of the bundling window (which consists of 16 in total, as calculated by 4 CCs × 4 slots).

The UE, the base station determines the total number (here, nine) of pieces of DL data scheduled in the bundling window, based on the total DAI of pieces of downlink control information for scheduling the pieces of DL data. FIG. 3 shows a case in which the UE determines the codebook size, based on the total DAI (here, a bit value "1" corresponding to 9) included in pieces of downlink control information for scheduling respective pieces of DL data in the last slot of the bundling window.

When a dynamic change of the codebook size of the HARQ-ACK is configured for the UE from the base station by using higher layer signaling or the like, the UE may control the order of HARQ-ACK bits (A/N allocation order) to be fed back, based on the counter DAI included in the downlink control information.

When the counter DAI included in received downlink control information is non-consecutive, the UE feeds back what presents the non-consecutiveness as a NACK to the base station. Owing to such a configuration, even if the UE fails to detect the downlink control information for scheduling data of a given CC and thus fails to recognize the CC that the UE has failed to detect, the UE can appropriately perform retransmission control by feeding back the detection failure as a NACK.

As described above, in the second aspect, the UE determines the codebook size of the HARQ-ACK to be multiplexed on the PUSCH and allocation of the HARQ-ACK (for example, order of HARQ-ACK bits), based on information included in the downlink control information (DL assignment) for scheduling DL data.

Owing to such a configuration, also when transmission of the PUSCH is performed without a UL grant, the UE can appropriately determine the number of bits (codebook size) of the HARQ-ACK to be multiplexed on the PUSCH. As described above, when control is performed by dynamically changing the codebook size, in the UL grant-free transmission, multiplexing of the HARQ-ACK on the PUSCH is controlled based on pieces of information different from those used in the UL grant-based transmission. As a result, multiplexing of the HARQ-ACK can be appropriately controlled according to a transmission method.

The UE may control the codebook size of the HARQ-ACK by semi-statically changing the codebook size. For example, when a semi-static change of the codebook size of the HARQ-ACK is configured for the UE from the base station by using higher layer signaling or the like, the UE applies the codebook size configured in advance, regardless of the number of pieces of scheduled data. The codebook size may be configured for the UE in advance by using higher layer signaling or the like.

For example, the UE feeds back the HARQ-ACK for all of possibly scheduled PDSCHs of all the CCs of each slot in a bundling window. When the codebook size of the HARQ-ACK is controlled by semi-statically changing the codebook size, the UE may control the order of HARQ-ACK bits (A/N allocation order) to be fed back, based on a given condition.

As described above, HARQ-ACK feedback may be controlled by using different methods for the case that the codebook size of the HARQ-ACK is dynamically changed and the case that the codebook size is semi-statically changed. Note that, when control is performed by semi-statically changing the codebook size of the HARQ-ACK, the same method may be used to control the HARQ-ACK to be multiplexed on the PUSCH in the UL grant-based transmission and the UL grant-based transmission.

### <Variation 1>

The UE may control the number of bits (codebook size) of the HARQ-ACK, based on a method of multiplexing the HARQ-ACK on the PUSCH. Alternatively, when PUSCH transmission without a UL grant is performed, the UE may determine which processing, rate-matching or puncture, is to be applied to data of the PUSCH transmission, based on the number of bits of the HARQ-ACK to be multiplexed on the PUSCH.

For example, in the UL grant-free transmission, the UE may set a limit on the number of bits of the HARQ-ACK to be multiplexed on the PUSCH to up to a given value (for example, 2 bits), and may apply puncturing process to perform multiplexing of the HARQ-ACK on the PUSCH. In this case, the UE may puncture UL data of the PUSCH to multiplex the HARQ-ACK of up to 2 bits.

The UE may assume that the HARQ-ACK of more than 2 bits is not to be multiplexed on the PUSCH without a UL grant. In this case, if there is an HARQ-ACK, the base station can assume that the PUSCH without a UL grant is invariably punctured, and thus no longer needs to perform blind decoding presupposing rate-matching. As a result, a processing load can be reduced.

Note that the base station may control scheduling so that the HARQ-ACK of more than 2 bits is not transmitted in resources that may be used to transmit the PUSCH without a UL grant. If there is an HARQ-ACK of more than 2 bits at the same timing as the PUSCH without a UL grant, the UE may drop the HARQ-ACK.

### <Variation 2>

When the UL grant-free transmission employs type 2, the UL grant-free transmission (or the PUSCH transmission) is activated by using downlink control information. In this case, information related to the codebook size of the HARQ-ACK may be reported by using DCI for activation.

For example, the UE determines the codebook size of the HARQ-ACK to be multiplexed on the PUSCH, based on information included in the downlink control information for activating the UL grant-free transmission. In addition, the UE may determine allocation of the HARQ-ACK to be multiplexed on the PUSCH, based on information (counter DAI) included in the downlink control information (DL assignment) for scheduling DL data.

Owing to such a configuration, the UE can appropriately determine the total number of HARQ-ACKs, based on the information included in the DCI for activation, even if the UE fails to detect the whole downlink control information in the last slot used to perform scheduling of DL data in the bundling window.

Also when the UL grant-free transmission employs type 2, multiplexing of the HARQ-ACK on the PUSCH may be controlled based on the counter DAI and the total DAI included in the DL assignment, in a similar manner to type 1.

### (Third Aspect)

The third aspect will describe a case in which the base station controls scheduling so that the number of bits of the HARQ-ACK to be multiplexed on the PUSCH has up to given value. According to the description below, the third aspect can be appropriately applied to the UL grant-based transmission. Note that the third aspect may be applied to the UL grant-free transmission, or may be applied to either one or both of the UL grant-based transmission and the UL grant-free transmission.

For example, the base station controls scheduling of the PDSCH and/or the PUSCH so that the number of bits of the HARQ-ACK to be piggybacked on the PUSCH does not exceed 2 bits (up to 2 bits). The UE may assume that the HARQ-ACK of more than 2 bits is not to be multiplexed on the PUSCH. In this case, when the HARQ-ACK is piggybacked on the PUSCH, the base station can assume that the PUSCH is invariably punctured, and thus no longer needs to perform blind decoding presupposing rate-matching. As a result, a processing load can be reduced.

The base station may control scheduling of the PDSCH and/or the PUSCH so that, with regard to the PUSCH, piggyback of the HARQ-ACK on the PUSCH is prevented (so that the HARQ-ACK is not multiplexed on the PUSCH).

For example, if there are HARQ-ACK bits transmitted from the UE at given timing (for example, in a slot), control is performed so that the PUSCH is not transmitted at the timing. Owing to such a configuration, the transmission timing of the PUSCH and the transmission timing of the HARQ-ACK can be prevented from overlapping each other.

Alternatively, when the PUSCH transmission is scheduled or the PUSCH is configured at given timing, scheduling of the PDSCH is controlled so that the transmission timing of the PUSCH and the transmission timing of the HARQ-ACK do not overlap each other. When the transmission timing of the HARQ-ACK is reported from the base station to the UE, the base station may perform control so that the transmission timing of the HARQ-ACK and the transmission timing of the PUSCH do not overlap each other.

As described above, when the base station controls at least one of the timings for the PDSCH, the PUSCH, and the HARQ-ACK so that the HARQ-ACK is not multiplexed on the PUSCH, the base station can assume that the HARQ-ACK transmitted from the UE is to be performed on the PUCCH. Owing to such a configuration, the HARQ-ACK can be received without taking multiplexing of the HARQ-ACK on the PUSCH into consideration. As a result, a processing load can be reduced.

### (Radio Communication System)

Hereinafter, a structure of a radio communication system according to one embodiment of the present invention will be described. In this radio communication system, the radio communication method according to each embodiment of the present invention described above may be used alone or may be used in combination for communication.

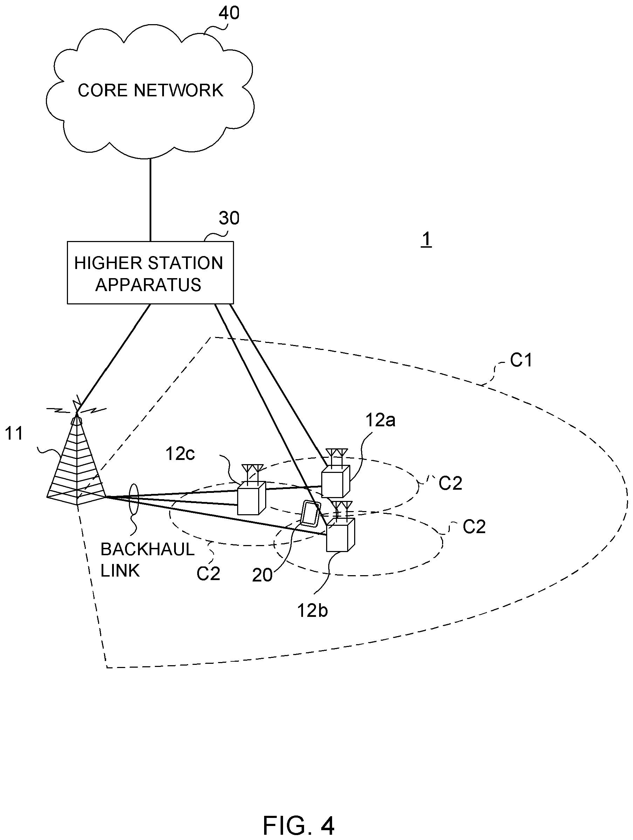

FIG. 4 is a diagram to show an example of a schematic structure of the radio communication system according to one embodiment of the present invention. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 can execute CA or DC by using a plurality of cells (CCs) (for example, five or less CCs or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Acknowledgement information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, acknowledgement information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

### <Radio Base Station>

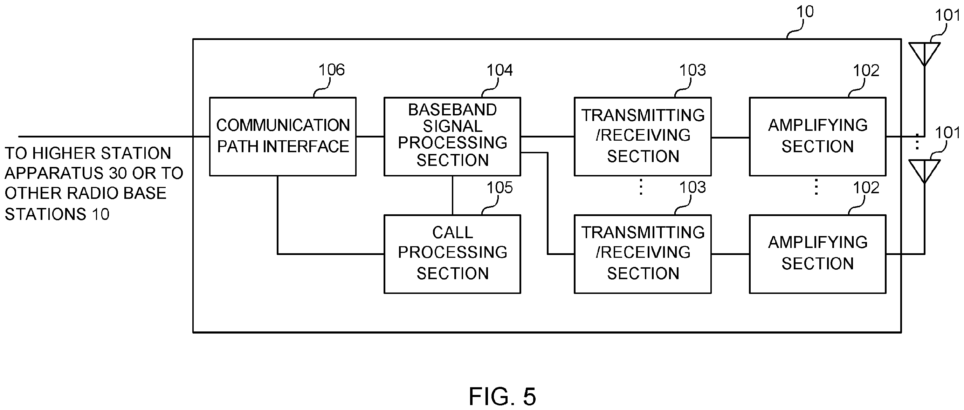

FIG. 5 is a diagram to show an example of an overall structure of the radio base station according to one embodiment of the present invention. A radio base station 10 includes a plurality of transmitting/receiving antennas 101, amplifying sections 102, transmitting/receiving sections 103, a baseband signal processing section 104, a call processing section 105 and a communication path interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the radio base station 10, manages the radio resources and so on.

The communication path interface 106 transmits and/or receives signals to and/or from the higher station apparatus 30 via a given interface. The communication path interface 106 may transmit and/or receive signals (backhaul signaling) with other radio base stations 10 via an inter-base station interface (for example, an optical fiber in compliance with the CPRI (Common Public Radio Interface) and an X2 interface).

Each of the transmitting/receiving sections 103 receives an acknowledgement signal (HARQ-ACK) to be multiplexed on a first uplink shared channel used to perform transmission based on downlink control information that is used by the user terminal to indicate UL transmission and/or a second uplink shared channel used to perform transmission regardless of downlink control information for indicating UL transmission. Note that the first uplink shared channel and the second uplink shared channel may be the same resource, may be different resources, or may be partially overlapping resources.

Each of the transmitting/receiving sections 103 transmits the downlink control information (UL grant) and DL data for indicating the UL transmission. Each of the transmitting/receiving sections 103 may report information related to the number of bits of the HARQ-ACK (or the number of pieces of scheduled DL data) to be transmitted on the PUSCH by embedding the information into the UL grant for indicating the UL transmission. Each of the transmitting/receiving sections 103 may transmit a counter DAI and a total DAI by embedding the counter DAI and the total DAI into the downlink control information (DL assignment) for scheduling the DL data.

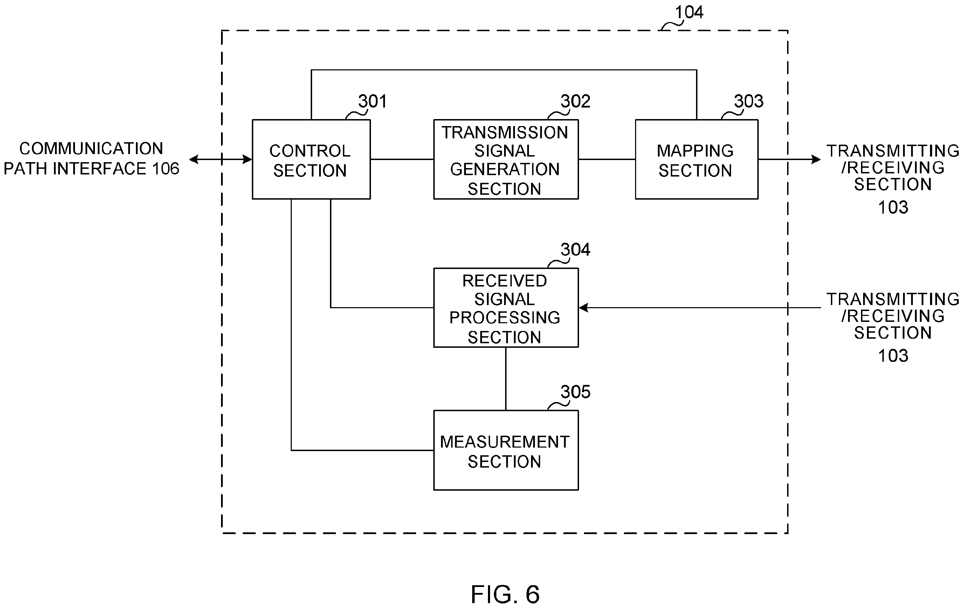

FIG. 6 is a diagram to show an example of a functional structure of the radio base station according to one embodiment of the present invention. Note that, the present example primarily shows functional blocks that pertain to characteristic parts of the present embodiment, and it is assumed that the radio base station 10 includes other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit or control apparatus that can be described based on general understanding of the technical field to which the present invention pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH, acknowledgement information, and so on). Based on the results of determining necessity or not of retransmission control to the uplink data signal, or the like, the control section 301 controls generation of a downlink control signal, a downlink data signal, and so on. The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal (for example, a signal transmitted on the PUSCH), an uplink control signal (for example, a signal transmitted on the PUCCH and/or the PUSCH, acknowledgement information, and so on), a random access preamble (for example, a signal transmitted on the PRACH), an uplink reference signal, and so on.

The control section 301 may control scheduling so that the number of bits of the acknowledgement signal of the DL data to be multiplexed on the first uplink shared channel transmitted from the UE based on the downlink control information and/or the second uplink shared channel transmitted from the UE regardless of the downlink control information has a given value or less. In this case, when the acknowledgement signal is multiplexed on the first uplink shared channel and/or the second uplink shared channel, the control section 301 may control a receiving process by assuming that the puncturing process is to be applied.

The control section 301 may control scheduling of the DL data and/or the first uplink shared channel so that the transmission timing of the first uplink shared channel and/or the second uplink shared channel and the transmission timing of the acknowledgement signal do not overlap each other.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present invention pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to given radio resources, based on commands from the control section 301, and outputs these to the transmitting/receiving sections 103. The mapping section 303 can be constituted with a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present invention pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present invention pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality)), an SINR (Signal to Interference plus Noise Ratio), a signal strength (for example, RSSI (Received Signal Strength Indicator)), channel information (for example, CSI), and so on. The measurement results may be output to the control section 301.

### <User Terminal>

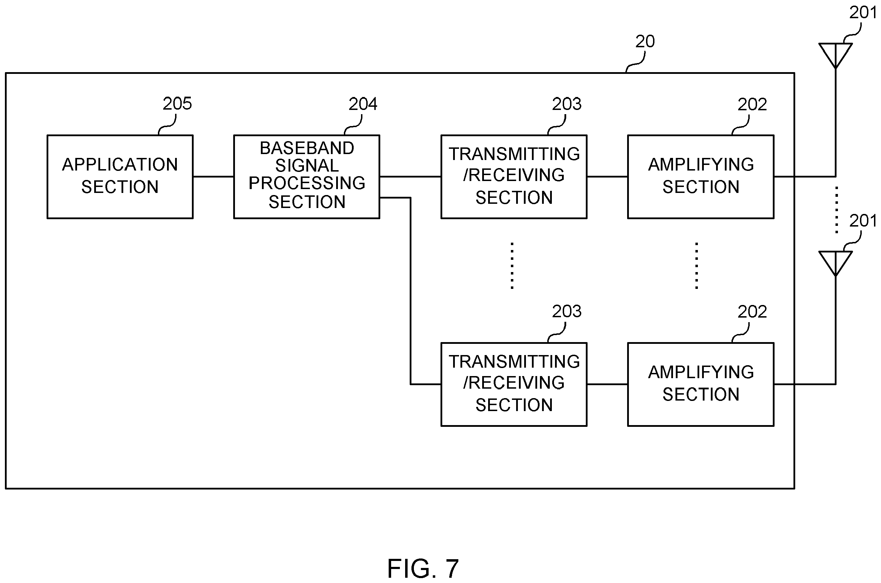

FIG. 7 is a diagram to show an example of an overall structure of a user terminal according to one embodiment of the present invention. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present invention pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

Each of the transmitting/receiving sections 203 transmits an acknowledgement signal by multiplexing the acknowledgement signal on a first uplink shared channel used to perform transmission based on downlink control information for indicating UL transmission from a radio base station and/or a second uplink shared channel used to perform transmission regardless of downlink control information for indicating UL transmission. Note that the first uplink shared channel and the second uplink shared channel may be the same resource, may be different resources, or may be partially overlapping resources.

Each of the transmitting/receiving sections 203 receives the downlink control information (UL grant) and DL data for indicating the UL transmission. Each of the transmitting/receiving sections 203 receives the UL grant including information related to the number of bits of the HARQ-ACK (or the number of pieces of scheduled DL data) to be multiplexed on the PUSCH. Each of the transmitting/receiving sections 203 may receive the downlink control information (DL assignment) including a counter DAI and a total DAI.

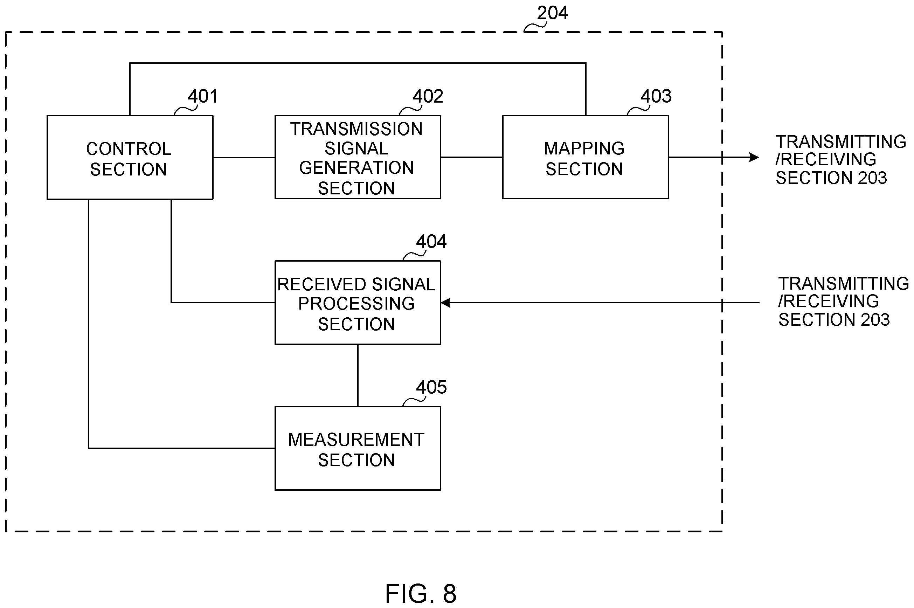

FIG. 8 is a diagram to show an example of a functional structure of a user terminal according to one embodiment of the present invention. Note that, the present example primarily shows functional blocks that pertain to characteristic parts of the present embodiment, and it is assumed that the user terminal 20 includes other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present invention pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The control section 401 determines the number of bits of the acknowledgement signal to be multiplexed on the first uplink shared channel used to perform transmission based on the downlink control information for indicating the UL transmission from the radio base station, and the number of bits of the acknowledgement signal to be multiplexed on the second uplink shared channel used to perform transmission regardless of the downlink control information for indicating the UL transmission, based on given information (for example, different pieces of information).

For example, the control section 401 determines the number of bits of the acknowledgement signal to be multiplexed on the first uplink shared channel, based on information included in the downlink control information for indicating the UL transmission (see FIG. 2). The control section 401 determines the number of bits of the acknowledgement signal to be multiplexed on the second uplink shared channel, based on information included in the downlink control information for scheduling the DL data (see FIG. 3) .

The control section 401 may determine a bit value of the acknowledgement signal, based on information representing a count value included in the downlink control information for scheduling the DL data. When the acknowledgement signal is multiplexed on the second uplink shared channel, the control section 401 may control the number of bits of the acknowledgement signal to up to a given value and apply puncturing process. Alternatively, when a mode in which transmission is performed regardless of the downlink control information for indicating the UL transmission is activated by using the downlink control information, the control section 401 may determine the number of bits of the acknowledgement signal to be multiplexed on the second uplink shared channel, based on information included in the downlink control information for indicating the activation.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present invention pertains.

For example, the transmission signal generation section 402 generates an uplink control signal about acknowledgement information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit or signal processing apparatus that can be described based on general understanding of the technical field to which the present invention pertains. The received signal processing section 404 can constitute the receiving section according to the present invention.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present invention pertains.

For example, the measurement section 405 may perform RRM measurement, CSI measurement, and so on, based on the received signal. The measurement section 405 may measure a received power (for example, RSRP), a received quality (for example, RSRQ, SINR), a signal strength (for example, RSSI), channel information (for example, CSI), and so on. The measurement results may be output to the control section 401.

### <Hardware Structure>

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

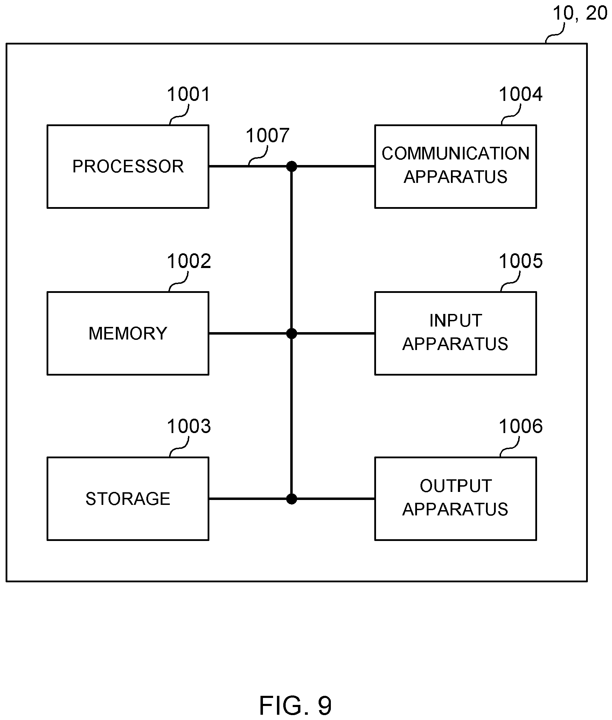

For example, a radio base station, a user terminal, and so on according to one embodiment of the present invention may function as a computer that executes the processes of the radio communication method of the present invention. FIG. 9 is a diagram to show an example of a hardware structure of the radio base station and the user terminal according to one embodiment of the present invention. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control reading and/or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case that one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to given values, or may be represented in another corresponding information. For example, radio resources may be specified by given indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described in this specification. Consequently, the description in this specification is provided only for the purpose of explaining examples, and should by no means be construed to limit the present invention in any way.

## Claims

1. A terminal (20) comprising:
a transmitting section (203) configured to multiplex and to transmit HARQ-ACK in at least one of a first uplink shared channel transmission scheduled by first downlink control information and a second uplink shared channel transmission activated by second downlink control information; and
a control section (401) configured to:
control, when the HARQ-ACK is multiplexed in the first uplink shared channel transmission, generation of an HARQ-ACK codebook based on a Downlink Assignment Indicator, DAI, included in the first downlink control information and a counter DAI included in downlink control information for scheduling a downlink shared channel, and
control, when the HARQ-ACK is multiplexed in the second uplink shared channel transmission, generation of the HARQ-ACK codebook based on a total DAI and the counter DAI included in downlink control information for scheduling a downlink shared channel,
wherein the control section is configured to control multiplexing of the HARQ-ACK in the second uplink shared channel transmission based on a number of bits of the HARQ-ACK.

2. The terminal (20) according to claim 1, wherein the counter DAI denotes an accumulative value that is accumulated first in an ascending order of cell index and then in an ascending order of time index.

3. A radio communication method for a terminal (20), comprising:
multiplexing and transmitting HARQ-ACK in at least one of a first uplink shared channel transmission scheduled by first downlink control information and a second uplink shared channel transmission activated by second downlink control information;
controlling, when the HARQ-ACK is multiplexed in the first uplink shared channel transmission, ¹generation of an HARQ-ACK codebook based on a Downlink Assignment Indicator, DAI, included in the first downlink control information and a counter DAI included in downlink control information for scheduling a downlink shared channel, and
controlling, when the HARQ-ACK is multiplexed in the second uplink shared channel transmission, generation of the HARQ-ACK codebook based on a total DAI and the counter DAI included in downlink control information for scheduling a downlink shared channel, and
controlling multiplexing of the HARQ-ACK in the second uplink shared channel transmission based on a number of bits of the HARQ-ACK.

4. A base station (10) comprising:
a receiving section (103) configured to receive a signal that is transmitted by multiplexing HARQ-ACK in at least one of a first uplink shared channel transmission scheduled by first downlink control information and a second uplink shared channel transmission activated by second downlink control information; and
a control section (301) configured to control reception of at least one of:
an ACK/NACK that is transmitted based on an HARQ-ACK codebook generated based on a Downlink Assignment Indicator, DAI, included in the first downlink control information and a counter DAI included in downlink control information for scheduling a downlink shared channel when the HARQ-ACK is multiplexed in the first uplink shared channel transmission, and
an ACK/NACK that is transmitted based on a HARQ-ACK codebook generated based on a total DAI and the counter DAI included in downlink control information for scheduling a downlink shared channel when the HARQ-ACK is multiplexed in the second uplink shared channel transmission,
wherein the HARQ-ACK is multiplexed in the second uplink shared channel transmission based on a number of bits of the HARQ-ACK.

5. A system (1) comprising a terminal (20) and a base station (10), wherein:
the terminal comprises:
a transmitting section (203) configured to multiplex and to transmit HARQ-ACK in at least one of a first uplink shared channel transmission scheduled by first downlink control information and a second uplink shared channel transmission activated by second downlink control information; and
a control section (401) configured to:
control, when the HARQ-ACK is multiplexed in the first uplink shared channel transmission, generation of an HARQ-ACK codebook based on a Downlink Assignment Indicator, DAI, included in the first downlink control information and a counter DAI included in downlink control information for scheduling a downlink shared channel, and
control, when the HARQ-ACK is multiplexed in the second uplink shared channel transmission, generation of the HARQ-ACK codebook based on a total DAI and the counter DAI included in downlink control information for scheduling a downlink shared channel,
wherein the control section is configured to control multiplexing of the HARQ-ACK in the second uplink shared channel transmission based on a number of bits of the HARQ-ACK, and
the base station comprises:
a transmitting section (103) configured to transmit at least one of the first downlink control information and the second downlink control information.

## Patentansprüche

1. Endgerät (20), umfassend:
einen Übertragungsabschnitt (203), der konfiguriert ist, um HARQ-ACK in zumindest einer von einer ersten Übertragung über einen gemeinsam genutzten Aufwärtsverbindungskanal, die durch erste Abwärtsverbindungssteuerinformationen geplant wird, und einer zweiten Übertragung über einen gemeinsam genutzten Aufwärtsverbindungskanal, die durch zweite Abwärtsverbindungssteuerinformationen aktiviert wird, zu multiplexen und zu übertragen; und
einen Steuerabschnitt (401), der konfiguriert ist zum:
Steuern der Erzeugung eines HARQ-ACK-Codebuchs basierend auf einem in den ersten Abwärtsverbindungssteuerinformationen eingeschlossenen Abwärtsverbindungszuweisungsindikators, DAI, und eines in den Abwärtsverbindungssteuerinformationen eingeschlossenen Zähler-DAI zum Planen eines gemeinsam genutzten Abwärtsverbindungskanals, wenn die HARQ-ACK in der ersten Übertragung über einen gemeinsam genutzten Aufwärtsverbindungskanal gemultiplext wird, und
Steuern der Erzeugung des HARQ-ACK-Codebuchs basierend auf einem Gesamt-DAI und dem Zähler-DAI, der in Abwärtsverbindungssteuerinformationen eingeschlossen ist, zum Planen eines gemeinsam genutzten Abwärtsverbindungskanals, wenn die HARQ-ACK in der zweiten Übertragung über einen gemeinsam genutzten Aufwärtsverbindungskanal gemultiplext wird,
wobei der Steuerabschnitt konfiguriert ist, um das Multiplexen der HARQ-ACK in der zweiten Übertragung über einen gemeinsam genutzten Aufwärtsverbindungskanal basierend auf einer Anzahl von Bits der HARQ-ACK zu steuern.

2. Endgerät (20) nach Anspruch 1, wobei der Zähler DAI einen kumulativen Wert bezeichnet, der zuerst in aufsteigender Reihenfolge des Zellenindex und dann in aufsteigender Reihenfolge des Zeitindex kumuliert wird.

3. Funkkommunikationsverfahren für ein Endgerät (20), umfassend:
Multiplexen und Übertragen von HARQ-ACK in zumindest einer von einer ersten Übertragung über einen gemeinsam genutzten Aufwärtsverbindungskanal, die durch erste Abwärtsverbindungssteuerinformationen geplant wird, und einer zweiten Übertragung über einen gemeinsam genutzten Aufwärtsverbindungskanal, die durch zweite Abwärtsverbindungssteuerinformationen aktiviert wird;
Steuern, wenn die HARQ-ACK in der ersten Übertragung über einen gemeinsam genutzten Aufwärtsverbindungskanal gemultiplext wird, ¹der Erzeugung eines HARQ-ACK-Codebuchs basierend auf einem in den ersten Abwärtsverbindungssteuerinformationen eingeschlossenen Abwärtsverbindungszuweisungsindikator, DAI, und einem in den Abwärtsverbindungssteuerinformationen eingeschlossenen Zähler-DAI zum Planen eines gemeinsam genutzten Abwärtsverbindungskanals, und
Steuern, wenn die HARQ-ACK in der zweiten Übertragung über einen gemeinsam genutzten Aufwärtsverbindungskanal gemultiplext wird, der Erzeugung des HARQ-ACK-Codebuchs basierend auf einem Gesamt-DAI und dem Zähler-DAI, der in Abwärtsverbindungssteuerinformationen eingeschlossen ist, zum Planen eines gemeinsam genutzten Abwärtsverbindungskanals, und
Steuern des Multiplexens der HARQ-ACK in der zweiten Übertragung über einen gemeinsam genutzten Aufwärtsverbindungskanal basierend auf einer Anzahl von Bits der HARQ-ACK.

4. Basisstation (10), umfassend:
einen Empfangsabschnitt (103), der konfiguriert ist, um ein Signal zu empfangen, das durch Multiplexen von HARQ-ACK in zumindest einer von einer ersten Übertragung über einen gemeinsam genutzten Aufwärtsverbindungskanal, die durch erste Abwärtsverbindungssteuerinformationen geplant wird, und einer zweiten Übertragung über einen gemeinsam genutzten Aufwärtsverbindungskanal, die durch zweite Abwärtsverbindungssteuerinformationen aktiviert wird, übertragen wird; und
einen Steuerabschnitt (301), der konfiguriert ist zum Steuern des Empfangs von zumindest einem von:
einer ACK/NACK, die basierend auf einem HARQ-ACK-Codebuch übertragen wird, das basierend auf einem in den ersten Abwärtsverbindungssteuerinformationen eingeschlossenen Abwärtsverbindungszuweisungsindikator, DAI, erzeugt wird, und
einem Zähler-DAI, der in die Abwärtsverbindungssteuerinformationen eingeschlossen ist, um einen gemeinsam genutzten Abwärtsverbindungskanal zu planen, wenn die HARQ-ACK in der ersten Übertragung über einen gemeinsam genutzten Aufwärtsverbindungskanal gemultiplext wird, und
einer ACK/NACK, die basierend auf einem HARQ-ACK-Codebuch übertragen wird, das basierend auf einem Gesamt-DAI und dem Zähler-DAI erzeugt wird, der in den Abwärtsverbindungssteuerinformationen eingeschlossen ist, um einen gemeinsam genutzten Abwärtsverbindungskanal zu planen, wenn die HARQ-ACK in der zweiten Übertragung über einen gemeinsam genutzten Aufwärtsverbindungskanal gemultiplext wird,
wobei die HARQ-ACK in der zweiten Übertragung über einen gemeinsam genutzten Aufwärtsverbindungskanal basierend auf einer Anzahl von Bits der HARQ-ACK gemultiplext wird.

5. System (1), umfassend ein Endgerät (20) und eine Basisstation (10), wobei:
das Endgerät umfasst:
einen Übertragungsabschnitt (203), der konfiguriert ist, um HARQ-ACK in zumindest einer von einer ersten Übertragung über einen gemeinsam genutzten Aufwärtsverbindungskanal, die durch erste Abwärtsverbindungssteuerinformationen geplant wird, und einer zweiten Übertragung über einen gemeinsam genutzten Aufwärtsverbindungskanal, die durch zweite Abwärtsverbindungssteuerinformationen aktiviert wird, zu multiplexen und zu übertragen; und
einen Steuerabschnitt (401), der konfiguriert ist zum:
Steuern der Erzeugung eines HARQ-ACK-Codebuchs basierend auf einem in den ersten Abwärtsverbindungssteuerinformationen eingeschlossenen Abwärtsverbindungszuweisungsindikators, DAI, und eines in den Abwärtsverbindungssteuerinformationen eingeschlossenen Zähler-DAI zum Planen eines gemeinsam genutzten Abwärtsverbindungskanals, wenn die HARQ-ACK in der ersten Übertragung über einen gemeinsam genutzten Aufwärtsverbindungskanal gemultiplext wird, und
Steuern der Erzeugung des HARQ-ACK-Codebuchs basierend auf einem Gesamt-DAI und dem Zähler-DAI, der in Abwärtsverbindungssteuerinformationen eingeschlossen ist, zum Planen eines gemeinsam genutzten Abwärtsverbindungskanals, wenn die HARQ-ACK in der zweiten Übertragung über einen gemeinsam genutzten Aufwärtsverbindungskanal gemultiplext wird,
wobei der Steuerabschnitt konfiguriert ist, um das Multiplexen der HARQ-ACK in der zweiten Übertragung über einen gemeinsam genutzten Aufwärtsverbindungskanal basierend auf einer Anzahl von Bits der HARQ-ACK zu steuern, und
die Basisstation umfasst:
einen Übertragungsabschnitt (103), der konfiguriert ist, um zumindest eine von den ersten Abwärtsverbindungssteuerinformationen und den zweiten Abwärtsverbindungssteuerinformationen zu übertragen.

## Revendications

1. Terminal (20) comprenant :
une section de transmission (203) configurée pour multiplexer et pour transmettre un accusé de réception HARQ-ACK dans au moins une transmission parmi une première transmission de canal partagé de liaison montante programmée par des premières informations de commande de liaison descendante et une deuxième transmission de canal partagé de liaison montante activée par des deuxièmes informations de commande de liaison descendante ; et
une section de commande (401) configurée pour :
commander, lorsque l'accusé de réception HARQ-ACK est multiplexé dans la première transmission de canal partagé de liaison montante, une génération d'un livre de codes HARQ-ACK sur la base d'un indicateur d'affectation de liaison descendante, DAI, inclus dans les premières informations de commande de liaison descendante et d'un compteur DAI inclus dans des informations de commande de liaison descendante pour programmer un canal partagé de liaison descendante, et
commander, lorsque l'accusé de réception HARQ-ACK est multiplexé dans la deuxième transmission de canal partagé de liaison montante, une génération du livre de codes HARQ-ACK sur la base d'un DAI total et du compteur DAI inclus dans des informations de commande de liaison descendante pour programmer un canal partagé de liaison descendante,
dans lequel la section de commande est configurée pour commander le multiplexage de l'accusé de réception HARQ-ACK dans la deuxième transmission de canal partagé de liaison montante sur la base d'un nombre de bits de l'accusé de réception HARQ-ACK.

2. Terminal (20) selon la revendication 1, dans lequel le compteur DAI désigne une valeur cumulée qui est accumulée d'abord dans un ordre croissant d'indice de cellule, puis dans un ordre croissant d'indice de temps.

3. Procédé de radio communication pour un terminal (20), comprenant :
multiplexer et transmettre un accusé de réception HARQ-ACK dans au moins une transmission parmi une première transmission de canal partagé de liaison montante programmée par des premières informations de commande de liaison descendante et une deuxième transmission de canal partagé de liaison montante activée par des deuxièmes informations de commande de liaison descendante ;
commander, lorsque l'accusé de réception HARQ-ACK est multiplexé dans la première transmission de canal partagé de liaison montante, ¹une génération d'un livre de codes HARQ-ACK sur la base d'un indicateur d'affectation de liaison descendante, DAI, inclus dans les premières informations de commande de liaison descendante et d'un compteur DAI inclus dans des informations de commande de liaison descendante pour programmer un canal partagé de liaison descendante, et
commander, lorsque l'accusé de réception HARQ-ACK est multiplexé dans la deuxième transmission de canal partagé de liaison montante, une génération du livre de codes HARQ-ACK sur la base d'un DAI total et du compteur DAI inclus dans des informations de commande de liaison descendante pour programmer un canal partagé de liaison descendante, et
commander le multiplexage de l'accusé de réception HARQ-ACK dans la deuxième transmission de canal partagé de liaison montante sur la base d'un nombre de bits de l'accusé de réception HARQ-ACK.

4. Station de base (10) comprenant :
une section de réception (103) configurée pour recevoir un signal qui est transmis par le multiplexage d'un accusé de réception HARQ-ACK dans au moins une transmission parmi une première transmission de canal partagé de liaison montante programmée par des premières informations de commande de liaison descendante et une deuxième transmission de canal partagé de liaison montante activée par des deuxièmes informations de commande de liaison descendante ; et
une section de commande (301) configurée pour commander une réception d'au moins un élément parmi :
un accusé de réception/accusé de réception négatif ACK/NACK qui est transmis sur la base d'un livre de codes HARQ-ACK généré sur la base d'un indicateur d'affectation de liaison descendante, DAI , inclus dans les premières informations de commande de liaison descendante et
un compteur DAI inclus dans des informations de commande de liaison descendante pour programmer un canal partagé de liaison descendante lorsque l'accusé de réception HARQ-ACK est multiplexé dans la première transmission de canal partagé de liaison montante, et
un accusé de réception/accusé de réception négatif ACK/NACK qui est transmis sur la base d'un livre de codes HARQ-ACK généré sur la base d'un DAI total et du compteur DAI inclus dans des informations de commande de liaison descendante pour programmer un canal partagé de liaison descendante lorsque l'accusé de réception HARQ-ACK est multiplexé dans la deuxième transmission de canal partagé de liaison montante,
dans lequel l'accusé de réception HARQ-ACK est multiplexé dans la deuxième transmission de canal partagé de liaison montante sur la base d'un nombre de bits de l'accusé de réception HARQ-ACK.

5. Système (1) comprenant un terminal (20) et une station de base (10), dans lequel :
le terminal comprend :
une section de transmission (203) configurée pour multiplexer et pour transmettre un accusé de réception HARQ-ACK dans au moins une transmission parmi une première transmission de canal partagé de liaison montante programmée par des premières informations de commande de liaison descendante et une deuxième transmission de canal partagé de liaison montante activée par des deuxièmes informations de commande de liaison descendante ; et
une section de commande (401) configurée pour :
commander, lorsque l'accusé de réception HARQ-ACK est multiplexé dans la première transmission de canal partagé de liaison montante, une génération d'un livre de codes HARQ-ACK sur la base d'un indicateur d'affectation de liaison descendante, DAI, inclus dans les premières informations de commande de liaison descendante et d'un compteur DAI inclus dans des informations de commande de liaison descendante pour programmer un canal partagé de liaison descendante, et
commander, lorsque l'accusé de réception HARQ-ACK est multiplexé dans la deuxième transmission de canal partagé de liaison montante, une génération du livre de codes HARQ-ACK sur la base d'un DAI total et du compteur DAI inclus dans des informations de commande de liaison descendante pour programmer un canal partagé de liaison descendante,
dans lequel la section de commande est configurée pour commander le multiplexage de l'accusé de réception HARQ-ACK dans la deuxième transmission de canal partagé de liaison montante sur la base d'un nombre de bits de l'accusé de réception HARQ-ACK, et
la station de base comprend :
une section de transmission (103) configurée pour transmettre au moins une des informations parmi les premières informations de commande de liaison descendante et les deuxièmes informations de commande de liaison descendante.
